Europäisches Patentamt

European Patent Office

Office européen des brevets

(19)

(11) Veröffentlichungsnummer: **0 092 172**
A1

# (12) EUROPÄISCHE PATENTANMELDUNG

(21) Anmeldenummer: **83103602.5**

(22) Anmeldetag: **14.04.83**

(51) Int. Cl.³: **G 05 D 1/03**

(30) Priorität: **20.04.82 DE 3214409**

(43) Veröffentlichungstag der Anmeldung: **26.10.83**
**Patentblatt 83/43**

(84) Benannte Vertragsstaaten: **AT BE CH FR GB IT LI NL SE**

(71) Anmelder: **Ernst Wagner KG, Postfach 132 St.**
**Peter-Strasse 5, D-7410 Reutlingen 1 (DE)**

(72) Erfinder: **Stiefel, Hermann, Donauschwabenstrasse 23,**
**D-7410 Reutlingen 2 (DE)**

(74) Vertreter: **Schmid, Berthold et al, Patentanwälte**
**Dipl.-Ing. B. Schmid Dr. Ing. G. Birn**
**Falbenhennenstrasse 17, D-7000 Stuttgart 1 (DE)**

(54) Vorrichtung zur Abtastung eines Leitdrahtes zur Führung von selbstfahrenden Fahrzeugen.

(57) Die Erfindung bezieht sich auf eine Vorrichtung zur Abtastung eines Leitdrahtes zur Führung von selbstfahrenden Fahrzeugen, mit zwei beidseits der Fahrzeugmittelachse liegenden Abtastelementen. Um die Abhängigkeit des Steuerungsimpulses von den Schwankungen der Feldstärke in den Abtastelementen möglichst zu verringern, wird der Lenkung anstelle der Spannungsdifferenz der beiden Abtastelemente der Quotient der Spannungswerte oder der Spannungsdifferenz und des arithmetischen Mittels zugeführt.

EP 0 092 172 A1

- 1 -

Firma

Ernst Wagner KG

7410 Reutlingen

Vorrichtung zur Abtastung eines Leitdrahtes
zur Führung von selbstfahrenden Fahrzeugen.

Bei den bekannten Vorrichtungen zur Abtastung eines Leitdrahtes
zur Führung von selbstfahrenden Fahrzeugen werden zwei beidseits der Fahrzeugmittellängsachse liegende Abtastelemente verwendet, wobei die Differenz der Spannungswerte der Steuerungsvorrichtung der Lenkung zugeführt wird. Die aufgenommene Feldstärke ist hierbei jedoch sehr unterschiedlich und von den verschiedensten Umständen, wie dem Abstand vom Boden, der Lage des
Leitdrahtes, zusätzlichem Eisen im Boden und Stromschwankungen im Leitdraht abhängig. Dadurch ändern sich die Spannungswerte
in den beiden Abtastelementen sehr stark, und infolgedessen ergeben sich auch sehr unterschiedliche absolute Differenzwerte,
worunter wiederum die Genauigkeit und Sicherheit der Lenkung
leidet.

Die Aufgabe der vorliegenden Erfindung ist es, den der Steuerung zugeführten Wert möglichst wenig schwanken zu lassen, um
einen von der Steuerung immer eindeutig definierbaren Steuerimpuls zu erhalten.

Dies wird erfindungsgemäß dadurch erreicht, daß der Quotient
der Spannungswerte der beiden Abtastelemente oder der Spannungsdifferenz und des arithmetischen Mittels der Spannungswerte auf den Lenkvorgang einwirkt. Damit ergeben sich also,
wenn man die beiden Spannungen mit den Indices l=links und
r=rechts bezeichnet, wahlweise folgende Formeln:

$$\text{a)} \quad \frac{ul}{ur} \qquad \text{b)} \quad \frac{ul-ur}{ul+ur}$$

Zur weiteren Verbesserung der Lenkgenauigkeit ist ein Lageregler vorgesehen, in welchem der Quotient und der Sollwert der
Fahrzeugposition zum Leitdraht insbesondere als Digitalwerte
verglichen werden. Die sich aus dem Lageregler ergebende

- 3 -

Ausgangsgröße, nämlich der Lenkwinkelsollwert, wird einem Lenkwinkellageregler zugeführt und hier seinerseits mit dem von der
Lenkung abgenommenen Lenkwinkelistwert verglichen. Dieser Differenzwert wird dann als Lenkbefehl dem Lenkmotor zugeführt.

Da in manchen Fällen die Eingabe einer Winkelvorgabe erwünscht
ist, ist die Verbindung zwischen dem Lageregler und dem Lenkwinkelregler vorzugsweise zu diesem Zweck unterbrechbar. Da bei
Kurvenfahrten mit maximalen Lenkausschlägen ein harter Anschlag
der Lenkung in den Endpositionen unerwünscht ist, da er das
Lenkverhalten ungünstig beeinflußt, ist nach einem weiteren
Merkmal der maximale elektrisch einstellbare Lenkwinkel kleiner
als der mechanische ausgebildet.

Zur Kennzeichnung verschiedener Fahrwege werden vielfach unterschiedliche Frequenzen verwendet. Bei den bekannten Fahrzeugen
waren für jede Frequenz gesonderte Abstimmkreise vorgesehen. Da
hierbei verhältnismäßig große Siebglied- Zeitkonstanten verwendet wurden, war die Regelgeschwindigkeit verhältnismäßig niedrig. Um höhere Geschwindigkeiten, vor allem in engen Regalgängen, fahren zu können, ist es erforderlich, die Regelgeschwindigkeit zu erhöhen. Dies wird durch Anordnung eines Überlagerungsempfängers zwischen den Abtastelementen und der Steuerungsvorrichtung für die Lenkung überreicht, der mit einer
festen Zwischenfrequenz versehen ist. Diese Anordnung hat ausserdem den Vorteil, daß die Abgleiche der verschiedenen Kreise

- 4 -

entfallen und nur noch das Zwischenfrequenzfilter abgeglichen werden muß. Außerdem ergibt sich, vor allem bei einer größeren Anzahl auftretender Frequenzen, auch eine Verbilligung durch diese Maßnahme.

Für die vorliegende Erfindung ist es unwesentlich, wie die Lenkung des Fahrzeugs erfolgt, und sämtliche Merkmale lassen sich beispielsweise auch bei einer Lenkung aufgrund von Drehzahldifferenzen und für Koordinatenfahrzeuge anwenden.

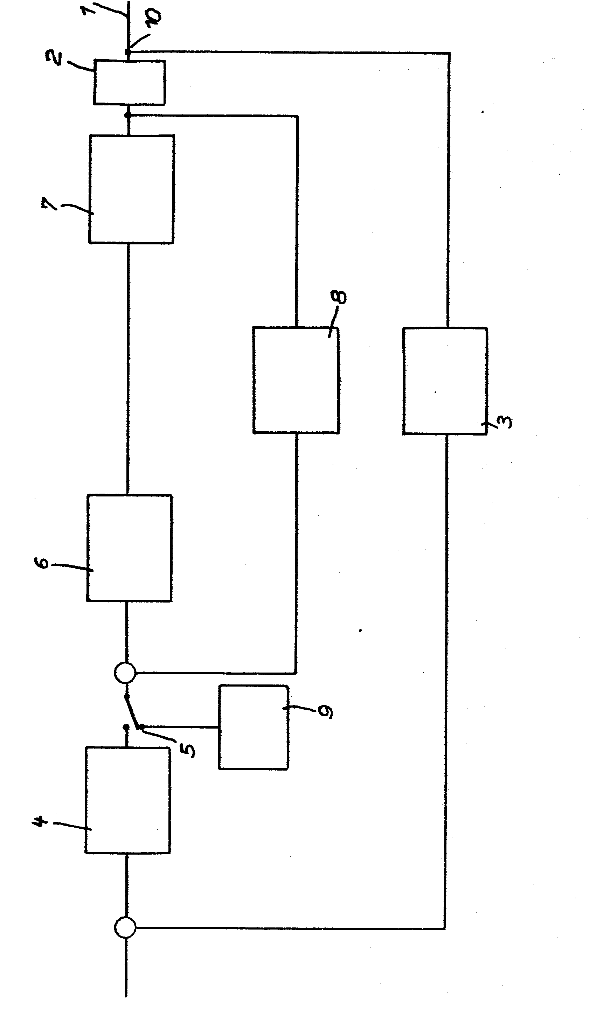

Die Zeichnung zeigt ein schematisches Blockschaltbild eines Regelkreises für eine erfindungsgemäße Vorrichtung.

Von den Abtastelementen im Aufnahmegerät 3 des Fahrzeuges 2 wird die Fahrzeugposition 10 gegenüber dem Leitdraht 1 aufgenommen, durch einen ebenfalls im Aufnahmegerät 3 angeordneten Überlagerungsempfänger ausgesiebt und verstärkt, worauf dann der Quotient der Spannungswerte oder der Spannungsdifferenz und des arithmetischen Mittels der Spannungswerte gebildet wird. Dieser Istwert der Fahrzeugposition wird zusammen mit dem Sollwert dem Lageregler 4 zugeführt. Die Ausgangsgröße des Lagereglers 4 ergibt den Lenkwinkelsollwert, der über einen Umschalter 5 dem Lenkwinkelregler 6 zugeführt wird. Vom gelenkten Rad 7 wird der Lenkwinkelistwert abgenommen und über einen Verstärker 8 ebenfalls in den Lenkwinkelregler 6 eingegeben. Der Differenzwert wird dann als Lenkbefehl dem gelenkten Rad 7 zugeführt.

Der Schalter 5 ist umschaltbar auf ein Eingabegerät 9, mit welchem eine Winkelvorgabe in den Lenkwinkelregler 6 eingegeben werden kann.

0092172

- 1 -

14 572

<u>A n s p r ü c h e</u>

1. Vorrichtung zur Abtastung eines Leitdrahtes zur Führung von selbstfahrenden Fahrzeugen mit zwei beidseits der Fahrzeugmittelachse liegenden Abtastelementen, deren Spannungswerte die Lenkvorrichtung steuern, dadurch gekennzeichnet, daß der Quotient der Spannungswerte oder der Spannungsdifferenz und des arithmetischen Mittels der Spannungswerte auf die Lenkvorrichtung (7) einwirkt.

2. Vorrichtung nach Anspruch 1, gekennzeichnet durch einen Lageregler (4), in welchem der Quotient und der Sollwert der Fahrzeugposition (1) zum Leitdraht (2) insbesondere als Digitalwerte verglichen werden und einen Lenkwinkelregler (6), in welchem der sich aus dem Lageregler (4) ergebende Lenkwinkelsollwert und der von der Lenkung (7) abgenommene Lenkwinkelistwert verglichen und der Differenzwert als Lenkbefehl der Lenkung (7) zugeführt wird.

3. Vorrichtung nach Anspruch 2, dadurch gekennzeichnet, daß die Verbindung (5) zwischen dem Lageregler (4) und dem Lenk-

- 2 -

winkelregler (6) zur Eingabe einer Winkelvorgabe (9) unterbrechbar ist.

4. Vorrichtung nach einem oder mehreren der vorhergehenden
Ansprüche, dadurch gekennzeichnet, daß der maximale, elektrisch
einstellbare Lenkwinkel kleiner als der mechanisch ausgebildete
ist.

5. Vorrichtung zur Abtastung eines Leitdrahtes zur Führung
von selbstfahrenden Fahrzeugen mit mindestens einem Abtastelement, dessen Spannungswerte die Lenkvorrichtung steuern, dadurch gekennzeichnet, daß zwischen dem Abtastelement und der
Steuerungsvorrichtung (4, 6) für die Lenkung (7) ein Überlagerungsempfänger (3) mit einer festen Zwischenfrequenz vorgesehen
ist.

Europäisches
Patentamt

**EUROPÄISCHER RECHERCHENBERICHT**

0092172

Nummer der Anmeldung

EP 83 10 3602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 448 492 (NATIONAL RESEARCH DEVELOPMENT)<br>* Seite 12, Zeile 10 - Seite 13, Zeile 20; Abbildung 1 * | 1 | G 05 D 1/03 |
| | --- | | |
| X | DE-A-1 808 442 (SIEMENS)<br>* Seite 5, Zeile 1 - Seite 6, Zeile 24; Abbildung 2 * | 1,2 | |
| | --- | | |
| A | GB-A-1 259 720 (MOBILITY SYSTEMS)<br>* Seite 3, Zeilen 63-122; Abbildung 2 * | 2,3 | |
| | --- | | |
| A | DE-A-2 946 559 (BOSCH)<br>* Seite 10, Zeilen 6-20; Abbildung 5 * | 5 | |
| | ----- | | |

**RECHERCHIERTE SACHGEBIETE (Int. Cl. ³)**

G 05 D
B 62 D

Der vorliegende Recherchenbericht wurde für alle Patentansprüche erstellt.

| Recherchenort<br>DEN HAAG | Abschlußdatum der Recherche<br>06-07-1983 | Prüfer<br>HELOT H.V. |
|---|---|---|